(19) Europäisches Patentamt
European Patent Office
Office européen des brevets

(11) **EP 2 661 114 B1**

(12) **EUROPEAN PATENT SPECIFICATION**

(45) Date of publication and mention of the grant of the patent:
**24.12.2014 Bulletin 2014/52**

(51) Int Cl.:
***H04W 16/10*** *(2009.01)*     ***H04W 72/04*** *(2009.01)*

(21) Application number: **12360032.2**

(22) Date of filing: **03.05.2012**

(54) **Method, apparatus and computer program product for selecting a Primary Scrambling Code in a Femto Cell**

Verfahren, Vorrichtung und Computerprogrammprodukt zum Auswählen eines primären Scrambling-Codes in einer Femtozelle

Procédé, appareil et produit programme d'ordinateur pour sélectionner un code de brouillage primaire dans une femto cellule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.11.2013 Bulletin 2013/45**

(73) Proprietor: **ALCATEL LUCENT**
**92100 Boulogne-Billancourt (FR)**

(72) Inventors:
• **Razavi, Rouzbeh**
**Blanchardstown, Dublin 15 (IE)**
• **Claussen, Holger**
**Straffan, Co Kildare (IE)**

(74) Representative: **Sarup, David Alexander**
**Alcatel-Lucent Telecom Ltd**
**Intellectual Property Business Group**
**Christchurch Way**
**Greenwich**
**London SE10 0AG (GB)**

(56) References cited:
EP-A1- 2 048 901     EP-A2- 1 657 950
WO-A1-2009/140310     WO-A2-2008/020969

• "3rd Generation Partnership Project; Technical Specification Group Radio Access Network; Home Node B (HNB) Radio Frequency (RF) requirements (FDD) (Release 10)", 3GPP STANDARD; 3GPP TR 25.967, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 12 April 2011 (2011-04-12), pages 1-55, XP050477543, [retrieved on 2011-04-12]
• Ken Duffy ET AL: "Decentralized Constraint Satisfaction", , 7 September 2011 (2011-09-07), pages 1-10, XP55040733, arXiv.org Retrieved from the Internet: URL:http://arxiv.org/pdf/1103.3240v3.pdf [retrieved on 2012-10-11]
• Alessandro Checco ET AL: "Self-Configuration of Scrambling Codes for WCDMA Small Cell Networks", , 9 September 2012 (2012-09-09), pages 1-6, XP55040725, PIMRC 2012 Retrieved from the Internet: URL:http://www.hamilton.ie/net/pimrc2012.p df [retrieved on 2012-10-11]

**Description**

FIELD OF THE INVENTION

The present invention relates to a method, a network node and a computer program product.

BACKGROUND OF THE INVENTION

Wireless telecommunications systems are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells within a macro cell. Such smaller sized cells are sometimes referred to as micro cells, pico cells or femto cells. One way to establish a small cell is to provide a small cell base station that provides coverage having a relatively limited range typically within the coverage area of a macro cell. The transmission power of a small cell base station is relatively low and hence each small cell provides a small coverage area compared to that of a macro cell and covering, example, an office or a home.

Such small cells are typically provided where the communications coverage provided by the macro cell is poor or where a user wishes to use an alternative communications link provided locally, by the small cell base station, to communicate with the core network. Such a situation may arise where, for example, a user has a pre-existing communications link and the user wishes to utilise that link in preference to that provided by a macro cell network provider to communicate with the core network.

A typical small cell base station utilises a broadband Internet protocol connection as backhaul for connecting to the core network. The small cell base station also includes a radio frequency (RF transceiver) connected to an antenna for radio communication within the small cell. The small base station generates a small cell typically in the vicinity of a building, with which user equipment may communicate with in preference to a base station of the macro cell.

In accordance with the third generation partnership project (3GPP) universal mobile telecommunications system (UMTS) standards, primary scrambling codes (PSC) are used to distinguish between neighbouring base stations. Typically, there are between 6 and 16 PSCs that are available for use by small cells. The PSC to be used by each small cell base station is typically selected by an automatic configuration process, based on measurements made by that small cell base station. For example, a small cell base station may detect, from received signals, which PSCs are in use around the small cell base station and may select a PSC that the small base station has not detected as being in use; otherwise, the small base station may select the PSC of the weakest signal received. Consequently, there is typically much PSC reuse since there is are relatively few PSCs to be used by relatively many small cell base stations.

In a typical wireless network many tens of thousands small cell base stations may be deployed within a network under the control of one network provider, which can make the manual provision and planning of the small cell deployment impractical for an operator. In addition, the network operator is unable to control the location of the small cells to help prevent any undue interference.

WO 2009/140310 A 1 discloses techniques for the autonomous downlink code selection for femto cells. Downlink transmissions are evaluated to recognise a first set of dedicated downlink codes that each have a pilot energy above a predetermined detection threshold. The optimal downlink code is based upon the first set of detected downlink codes and selected as a downlink code from a set of downlink codes reserved for the femto cell. The femto node then selects the best downlink code as follows: if all femto reserved downlink codes are being used, then the femto node picks the downlink code in the reserved set with the smallest amount of energy. Otherwise, the femto node picks a downlink code from the reserved set which was not detected.

3GPP TR 25.967 V10.0.0 discloses scrambling code selection where a home node B selects a spare scrambling code which is not used by neighbouring home node Bs. If all home node B/reserved scrambling codes are being used by neighbour home node Bs, the home node B picks a scrambling code with the smallest amount of detected energy. Otherwise, the home node B picks a scrambling code randomly from the set of scrambling codes in the reserved set which were not detected.

Accordingly, it is desired to provide an improved technique for selecting primary scrambling codes.

SUMMARY OF THE INVENTION

According to a first aspect, there is provided a method as claimed in claim 1.

The first aspect recognises that it is difficult to optimise the selection of a primary scrambling code for use by a small cell. In particular, the first aspect recognises that a problem with existing techniques is that the selection is generally somewhat static since the small cell base station would tend to continue to use a primary scrambling code once it has been selected, irrespective of the continued suitability of that primary scrambling code to support communications and irrespective of any changes in the network which may occur which impair the performance of the selected primary scrambling code.

Accordingly, a method is provided of selecting a primary scrambling code from a set or group of reserved or designated scrambling codes for use by a small cell. The method may include the step of determining an estimated performance of the small cell when using one of the primary scrambling codes from the reserved set. The method may also comprise the step of adjusting a weighting associated with a primary scrambling code periodically or regularly in response to the communication performance which is estimated for that primary scrambling code. The method may also comprise the step of selecting a primary scrambling code periodically or intermittently for use by the small cell in response to the weightings. In this way, the performance of the primary scrambling codes may be continually assessed and the primary scrambling code used by the small cell may be reselected based on the actual performance of the primary scrambling code. This enables the primary scrambling code to be changed in response to changes in the wireless telecommunications network or the surrounding environment.

The step of periodically adjusting comprises increasing a difference in weighting between the primary scrambling code selected to be used by the small cell and others in the set of reserved primary scrambling codes when the performance indicator associated with the primary scrambling code selected to be used by the small cell exceeds a performance threshold. Accordingly, should the primary scrambling code which is currently selected achieve an adequate communications performance level, then the weighting of that primary scrambling code may be adjusted in order to increase the likelihood of that primary scrambling code being reselected in the future.

In one embodiment, the step of periodically adjusting comprises maximising a weighting of the primary scrambling code selected to be used by the small cell and minimising a weighting of others in the set of reserved primary scrambling codes when the performance indicator associated with the primary scrambling code selected to be used by the small cell exceeds a performance threshold. Maximising the weighting of the selected primary scrambling code increases the likelihood of that primary scrambling code being reselected in the future.

In one embodiment, the step of periodically adjusting comprises decreasing a difference in weighting between the primary scrambling code selected to be used by the small cell and others in the set of reserved primary scrambling codes when the performance indicator associated with the primary scrambling code selected to be used by the small cell fails to achieve a performance threshold. Should the primary scrambling code which is currently selected not achieve an adequate communications performance level the difference in weighting may be decreased. By decreasing the difference in weighting, the likelihood of the currently selected primary scrambling code being reselected in future is reduced.

In one embodiment, the step of periodically adjusting comprises reducing a weighting of the primary scrambling code selected to be used by the small cell and increasing a weighting of others in the set of reserved primary scrambling codes when the performance indicator associated with the primary scrambling code selected to be used by the small cell fails to achieve a performance threshold.

The step of periodically adjusting comprises reducing a weighting of the primary scrambling code selected to be used by the small cell by a first amount and increasing a weighting of others in the set of reserved primary scrambling codes by a second amount, the second amount being less than the first amount when the performance indicator associated with the primary scrambling code selected to be used by the small cell fails to achieve a performance threshold.

In one embodiment, the weighting comprises a selection probability for an associated primary scrambling code. It will be appreciated that the weighting represents a probability of a particular associated primary scrambling code being selected.

In one embodiment, the performance indicator indicative of an estimated communication performance of the small cell when using each of the set of reserved primary scrambling codes is determined from measurements made by a small cell base station supporting the small cell. Accordingly, the small cell base stations themselves may determine the communication performance of the small cell using measurements made by the small cell base station.

In one embodiment, the performance indicator indicative of an estimated communication performance of the small cell when using each of the set of reserved primary scrambling codes is determined from measurements made by user equipment served by the small cell. Accordingly, the performance of the small cell when using the primary scrambling codes may also be determined by user equipment. It will be appreciated that such an approach helps to assess the performance of the primary scrambling code from the perspective of the user equipment within the small cell, rather than from the perspective of the base station which may not be able to detect all interfering transmissions.

In one embodiment, the performance indicator indicative of an estimated communication performance of the small cell when using each of the set of reserved primary scrambling codes is determined from averaged measurements made by user equipment served by the small cell. By averaging the measurements over a period of time, the stability of the selection of primary scrambling code is improved.

In one embodiment, the performance indicator comprises one of a received power of pilot signals using an associated primary scrambling code and an interference level associated with signals using an associated primary scrambling code.

In on embodiment, the method comprises the step of determining whether the primary scrambling code selected to be used by the small cell achieves a communications performance threshold within a set number of periodic adjustments and, if not, reducing the communications performance threshold. Reducing the performance threshold may help to improve the likelihood of converging to a primary scrambling code which offers the best performance.

In one embodiment, the method comprises the step of determining whether the primary scrambling code selected to be used by the small cell achieves a communications performance threshold within a set number of periodic adjustments and, if not, notifying the wireless telecommunications network.

In one embodiment, the method comprises the step of determining whether the primary scrambling code selected to be used by the small cell achieves a communications performance threshold within a set number of periodic adjustments and, if not, utilising a modified primary scrambling code selection scheme. Accordingly, a different primary scrambling code selection scheme or approach may be utilised when convergence to a suitable primary scrambling code does not occur quickly enough. In other words, should inadequate performance occur following a number of iterations, then an alternative algorithm is used.

In one embodiment, the modified primary scrambling code selection scheme comprises the steps of: determining a performance indicator indicative of an estimated communication performance of the small cell when using each of the set of reserved primary scrambling codes; and selecting the primary scrambling code to be that primary scrambling code indicated by its associated performance indicator to have a greatest estimated communications performance. Accordingly, the performance of each primary scrambling code may be assessed periodically and the primary scrambling code which provides the best performance may also be reselected periodically in order to ensure that the most suitable primary scrambling code continues to be selected.

In one embodiment, the set number of periodic adjustments is set between an upper and a lower number of periodic adjustments.

In one embodiment, the set number of periodic adjustments is set in proportion to a number of user equipment being served by the small cell.

In one embodiment, the step of determining the performance indicator occurs at randomised intervals. This helps to ensure that the performance is assessed at different times in order to prevent the determination being made during periods when interfering periodic transmissions are not occurring.

According to a second aspect, there is provided a network node as claimed in claim 14.

The network node is operable to select a primary scrambling code from a set of reserved primary scrambling codes for use by a small ceil deployable within an overlying cell of a wireless telecommunications network, said network node comprising: determining logic operable to determine a performance indicator indicative of an estimated communication performance of said small cell when using a given primary scrambling code from said set of reserved primary scrambling codes; adjustment logic operable to periodically adjust a weighting associated with at least one primary scrambling code of said set of reserved primary scrambling codes based on said performance indicator wherein the adjustment logic is operable to increase a difference in weighting between the primary scrambling code selected to be used by the small cell and others in the set of reserved primary scrambling codes when the performance indicator associated with the primary scrambling code selected to be used by the small cell exceeds a performance threshold; and selection logic operable to periodically select a primary scrambling code for use by said small cell from said set of reserved primary scrambling codes based on said weightings.

The adjustment logic is operable to increase a difference in weighting between the primary scrambling code selected to be used by the small cell and others in the set of reserved primary scrambling codes when the performance indicator associated with the primary scrambling code selected to be used by the small cell exceeds a performance threshold.

In one embodiment, the adjustment logic is operable to maximise a weighting of the primary scrambling code selected to be used by the small cell and minimising a weighting of others in the set of reserved primary scrambling codes when the performance indicator associated with the primary scrambling code selected to be used by the small cell exceeds a performance threshold.

In one embodiment, the adjustment logic is operable to decrease a difference in weighting between the primary scrambling code selected to be used by the small cell and others in the set of reserved primary scrambling codes when the performance indicator associated with the primary scrambling code selected to be used by the small cell fails to achieve a performance threshold.

In one embodiment, the adjustment logic is operable to reduce a weighting of the primary scrambling code selected to be used by the small cell and increasing a weighting of others in the set of reserved primary scrambling codes when the performance indicator associated with the primary scrambling code selected to be used by the small cell fails to achieve a performance threshold.

In one embodiment, the adjustment logic is operable to reduce a weighting of the primary scrambling code selected to be used by the small cell by a first amount and increasing a weighting of others in the set of reserved primary scrambling codes by a second amount, the second amount being less than the first amount when the performance indicator associated with the primary scrambling code selected to be used by the small cell fails to achieve a performance threshold.

In one embodiment, the weighting comprises a selection probability for an associated primary scrambling code.

In one embodiment, the performance indicator indicative of an estimated communication performance of the small cell when using each of the set of reserved primary scrambling codes is determined from measurements made by a small cell base station supporting the small cell.

In one embodiment, the performance indicator indicative of an estimated communication performance of the small cell when using each of the set of reserved primary scrambling codes is determined from measurements made by user equipment served by the small cell.

In bne embodiment, the performance indicator indicative of an estimated communication performance of the small cell when using each of the set of reserved primary scrambling codes is determined from averaged measurements made by user equipment served by the small cell.

In one embodiment, the performance indicator comprises one of a received power of pilot signals using an associated primary scrambling code and an interference level associated with signals using an associated primary scrambling code.

In one embodiment, the network node comprises logic operable to determine whether the primary scrambling code selected to be used by the small cell achieves a communications performance threshold within a set number of periodic adjustments and, if not, the logic is operable to reduce the communications performance threshold.

In one embodiment, the network node comprises logic operable to determine whether the primary scrambling code selected to be used by the small cell achieves a communications performance threshold within a set number of periodic adjustments and, if not, the logic is operable to notify the wireless telecommunications network.

In one embodiment, the network node comprises logic operable to determine whether the primary scrambling code selected to be used by the small cell achieves a communications performance threshold within a set number of periodic adjustments and, if not, the logic is operable to instruct the selection logic to utilise a modified primary scrambling code selection scheme.

In one embodiment, the selection logic is operable when utilising the modified primary scrambling code selection scheme to determine a performance indicator indicative of an estimated communication performance of the small cell when using each of the set of reserved primary scrambling codes, and to select the primary scrambling code to be that primary scrambling code indicated by its associated performance indicator to have a greatest estimated communications performance.

In one embodiment, the set number of periodic adjustments is set between an upper and a lower number of periodic adjustments.

In one embodiment, the set number of periodic adjustments is set in proportion to a number of user equipment being served by the small cell.

In one embodiment, the determining logic is operable to determine the performance indicator at randomised intervals.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

## BRIEF DESCRIPTION OF THE DRAWINGS

Embodiments of the present invention will now be described further, with reference to the accompanying drawings, in which:

Figure 1 illustrates the main processing steps undertaken by a small cell base station according to one embodiment; and

Figures 2 and 3 illustrate example deployments of small cell base stations.

## DESCRIPTION OF THE EMBODIMENTS

### Overview

Before discussing the embodiments and in any more detail, first an overview will be provided. As mentioned above, the selection of a suitable primary scrambling code for use by a small cell is typically constrained to a set or group of primary scrambling codes which are reserved or allocated for use by small cells. This means that the number of primary scrambling codes available to a small cell is limited and, if the density of a small cell deployment is high, can result a neighboring or closely located small cells using the same primary scrambling code, which leads to Interference. Although traditionally the network would differently allocate primary scrambling codes for use within cells, this is not possible in small cell deployments since the network operator will typically be unable to precisely control the location of the small cells. Accordingly, it is typical for such small cell deployments to require autonomous self-configuration and the ability to select their own primary scrambling code.

Accordingly, embodiments provide small cell base stations which select a primary scrambling code which is used when establishing a small cell. The primary scrambling code used is periodically or regularly reselected by reference to weightings associated with each available primary scrambling code. This enables the primary scrambling code whose weighting indicates that it is most suitable to be selected for use by the small cell. In order that the most suitable primary scrambling code continues to be selected, the performance of the small cell when using a primary scrambling code is assessed and the weightings associated with primary scrambling codes are adjusted on a regular basis based on this performance assessment.

In one approach, a combination of two techniques are used for selecting a primary scrambling code. In the first technique, a set of available scrambling codes $S =[S_1, S_2,...S_N]$ is provided. Each base station uses a probability vector $P = [P_1, P_2,...P_N]$, where Px refers to the probability of selecting Sx as the primary scrambling code. After initialization an initial primary scrambling code is selected. Using a satisfaction threshold, T, the base station examines whether or not the choice of current primary scrambling code is satisfactory and then, based on this determination, modifies the probability vector P. For example, should the current primary scrambling code Sx be satisfactory, Px may be set to 1 and all other elements of P set to 0; this causes the base station to continue to use the currently selected primary scrambling code until the satisfaction threshold fails to be achieved. If the current primary scrambling code Sx is unsatisfactory, then the element Px within the probability vector P is reduced and the other elements in the probability vector P associated with the other primary scrambling codes are increased. Although the performance of this algorithm is high, its convergence may be low. In the second technique all base stations continuously measure the power of transmissions from neighboring cells using the reserved set of primary scrambling codes (it will be appreciated that such continuous measurements will typically only be possible during gaps in transmissions made by the small cell base stations since otherwise those transmissions will interfere with those measurements) . The primary scrambling code associated with the transmission having the minimum detected power is used then by the base station. The primary scrambling code may then be changed if another becomes associated with the transmission having the minimum detected power. This approach converges very quickly but can result in sub-optimal allocation of primary scrambling codes.

Accordingly, a combined approach is used which seeks to provide the advantages of the two techniques. A base station initially attempts to allocate a primary scrambling code using the first technique mentioned above and then switches to using the second technique when convergence is not achieved within a number of iteration steps. In addition, the techniques may utilize measurements directly taken by the base stations themselves or may utilize measurement reports provided by user equipment in order to help alleviate problems caused by base stations which may not be directly detectable by each other and so are hidden, as will be explained in more detail below.

Primary Scrambling Codes

As mentioned above, self-configuration is a key enabler for the successful deployment of small cells. This is particularly true when it is considered that the deployment of small cells (for example femtocells or picocells) are expected to be ad-hoc and unplanned. Current standards require that each small cell is allocated a primary scrambling code. The primary scrambling code is used by a base station in Universal Mobile Telecommunications System (UMTS) and High Speed Packet Access (HSPA) as an identifier and it is important that neighboring base station utilise different primary scrambling codes in order to distinctively identify themselves. In macrocells, the primary scrambling code is chosen from a total of 512 available codes and, with such a large number of available codes, primary scrambling code allocation is a fairly straightforward task force, which is typically carried out manually. However, for small cells, the number of available primary scrambling codes is typically far less [around three or four in current implementations] and this number of primary scrambling codes are typically reserved for use by such small cells. It can be seen that with so few primary scrambling codes, their reuse is likely to be high, even with a relatively low density of deployment.

The reason for the low number of reserved primary scrambling codes can be explained as follows. The downlink synchronization channel is used to facilitate cell search. The channel consists of two sub-channels namely the primary synchronization channel (P-SCH) and the secondary synchronization channel (S-SCH). The P-SCH sequence is unique for all cells and is transmitted once in the same position in every slot and, consequently, can be used to detect a slot boundary. Once a slot boundary is identified, the S-SCH is used to detect the frame boundaries and scrambling code group. There are 16 S-SCH sequences mapped correspondingly to 16 S-SCH symbols. A frame (15 slots) of 15 such S-SCH symbols forms a code word taken from a codebook of 64 code words that provides a one-to-one mapping with the primary scrambling code group used in the cell. Given the primary scrambling code group, the actual primary scrambling code is identified based on a common pilot channel (C-PICH) and by correlating against all eight possibilities within the primary scrambling code group. Using the primary scrambling code, user equipment can then derive other information through the C-PICH or broadcast information. Thus, identifying and synchronizing to the downlink primary scrambling code is sufficient to identify any given cell of interest.

The cell acquisition time can be considerably reduced by restricting the size of the search space of primary scrambling code. This is achieved by constructing a neighbor cell list that identifies the primary scrambling codes of neighboring cells. A long neighbor cell list leads to slower neighbor detection, measurement and cell acquisition which could be of the order of several seconds. On the other hand, a short neighbor cell list can leads to high interference, failed handovers and dropped calls. While the neighbor cell list can be constructed manually with potential enhancement through drive tests to include missing neighbors, this is not feasible for small cells due to the unplanned and changing nature of the deployment.

As mentioned previously, typically, a number of primary scrambling codes are reserved specifically for small cells. Because small cells can be deployed within the coverage area of any macrocell, all macrocells need at this reserved set to the existing name for cell list.

To avoid excessively long neighbor cell lists, the number of reserved primary scrambling codes is kept very small. Since the deployment of small cells will typically be dense, it is particularly critical to allocate the scrambling codes so as to minimize the occurrence of primary scrambling code collisions since these can lead to identity conflict and dropped calls during handovers as well as increased interference on data channels. This problem becomes particularly acute when base stations are unable to detect each other because they are hidden, but that transmissions are interfering with each other and therefore impact on the transmissions with each other's users.

Primary Scrambling Code Selection

Embodiments provide a method for self configuration of of the primary scrambling codes for small cell networks. The aim is to minimize the collision of primary scrambling codes by reuse of a primary scrambling code by neighboring small cells. Embodiments use different techniques; the first embodiment is based on a learning algorithm that does not require communication between base stations; the second is an iterative version of a standard technique; and the third is a combination of these two. This approach is completely distributed and is standards compliant. In addition, the approach can use reports provided by user equipment which is particularly important in order to avoid a hidden base station problem that could occur particularly commonly in an indoor environment.

Embodiment 1 - Communication Free Learning Algorithm

Considering a set of reserved primary scrambling codes $S = [S_1, S_2,... S_N]$, each base station uses a probability vector $P = [P_1, P_2,...P_N]$ and Px refers to the probability of selecting Sx as the primary scrambling code. On initialization, P can be initialized with 1/N for all elements of the probability vector P (i.e. each element in the probability vector is given the same valie which gives an equal probability of selecting each primary scrambling code).

The base station then selects a random primary scrambling code Sx [where X <= N] based on the current probability vector P.

A fitness metric is used which is the total sum of common pilot channel interference from neighboring base stations with identical primary scrambling codes, which is represented as $I_{SC}$. It will be appreciated that there is a significant difference between normal common pilot channel interference and pilot channel collision, where the latter refers to the case where the same primary scrambling codes are used for two pilot channels. After selecting the primary scrambling code $S_X$, $I_{SC}$ is calculated and compared against a desired threshold T.

The primary scrambling code Sx is considered to be satisfactory if $I_{SC}$ is less than T and unsatisfactory otherwise. Accordingly, the probability vector P is then modified in accordance with:

If satisfactory:

$$\forall p_i \in P, \quad p_i = \begin{cases} 1 & if\ i = x \\ 0 & if\ i \neq x \end{cases} \qquad \text{... Equation 1}$$

Else

$$\forall p_i \in P, \quad p_i = \begin{cases} (1-\beta)\, p_i & \text{if } i = x \\ (1-\beta)\, p_i + \dfrac{\beta}{N-1} & \text{if } i \neq x \end{cases} \qquad \text{... Equation 2}$$

Where $\beta$ ($0 < \beta <= 1$) is a design parameter which determines the algorithm's aversion to its primary scrambling codes that led to a failure. As $\beta$ is made larger, failures are penalized more heavily and the memory or the "stickiness" of the system decreases. Communication free learning is a completely distributed algorithm and, hence, each base station keeps track of its own probability vector P. The approach is also very straightforward, without the need for complex computation or memory requirements and the algorithm will converge to any feasible solution.

Embodiment 2 - Iterative Greedy Algorithm

A base station scans all the reserved primary scrambling codes and constructs a list of the primary scrambling codes that have a detected energy above a certain threshold level. The base station then chooses a random scrambling code from a set of reserved primary scrambling codes that are undetected. If all the of reserved primary scrambling codes are detected, then the base station chooses the one that has the minimum detected power. For example, all those that are undetected may be given a higher (and typically equal) probability of selection weighting than those which have a detected energy above the threshold level. Likewise, if all the of reserved primary scrambling codes are detected, then the one that has the minimum detected power may be given a a higher probability of selection weighting than those which have a higher detected power.

This process occurs continuously or periodically. Hence, an iterative approach occurs which continues to select the best primary scrambling code for the current prevailing conditions. Hence, a different primary scrambling code may be selected following a change in primary scrambling code usage.

This technique provides for advantages over a single-step approach which selects and maintains a primary scrambling code which does not change despite changes in the environment and particularly changes in neighboring cells. Although this approach converges very quickly, the primary scrambling code application may be sub-optimal.

Embodiment 3 - Hybrid Communication Free Learning/Iterative Greedy Algorithm

This embodiment uses a combination of the communication free learning and iterative greedy algorithms mentioned above. The main advantage of the iterative greedy algorithm is its fast convergence. However this comes at the price of potentially converging to sub-optimal allocations. Although communication free learning performs better than the iterative greedy algorithm, this approach takes longer to converge. Also, there are situations where the communication free learning satisfaction threshold is not achievable, in which case the algorithm may continuously oscillate without converging to any stable allocation.

In order to benefit from the advantages of these two algorithms, a hybrid approach is used where the base station starts with the communication free learning algorithm and then switches to the iterative greedy algorithm if the communication free learning algorithm does not converge within a given number of iterations, M. M is a design parameter that acts as a balancing factor between performance and convergence time; decreasing M leads to a faster convergence.

Although the convergence time of the algorithm is an important performance metric, if the small cell base station is not serving any user it may be desirable to have an increased number of communication free learning iterations, M, to obtain improved performance. In one embodiment, M is linesarly modulated by the number of serving users and can be calculated as:

$$M = M_{max} - \left( \frac{No\_users}{Max\_users} \right) \times (M_{max} - M_{min}) \qquad \text{... Equation 3}$$

Where $M_{min}$ and $M_{max}$ are the lower and upper bounds of the value M, No_users is the current number of users and Max_users is the maximum number of supported users for each base station.

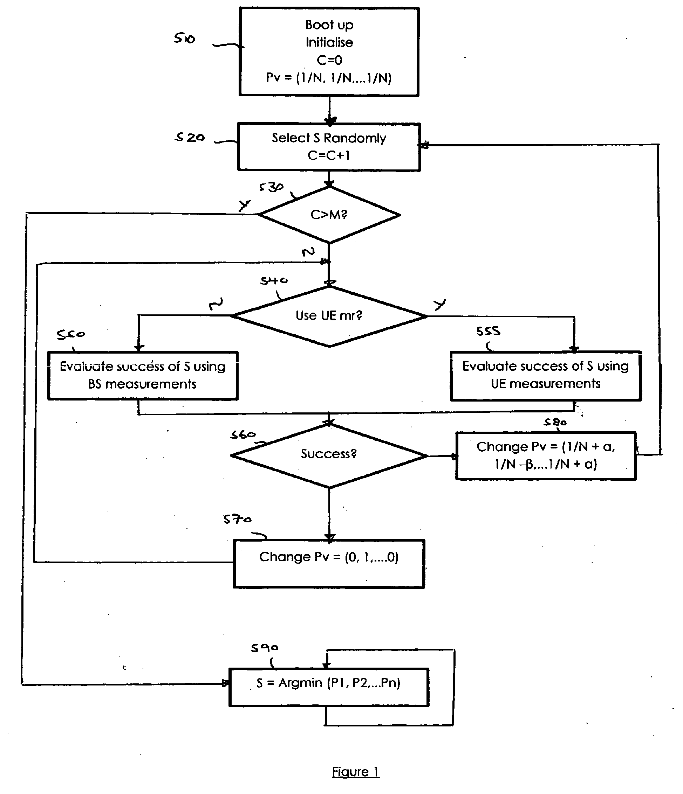

Figure 1 illustrates the main processing steps undertaken by a small cell base station when performing the hybrid approach.

At step S10, on initialization of the small cell base station, P is initialized with 1/N for all elements of the probability vector P (i.e. each element in the probability vector is given the same value which gives an equal probability of selecting each primary scrambling code, as described in embodiment 1 above). Also, a counter, C, is reset to zero.

At step S20, the small cell base station then selects a random primary scrambling code Sx [where X <= N] based on the current probability vector P, as described in embodiment 1 above. The counter C is incremented.

At step S30, a determination is made as to whether a convergence limit has been exceeded (i.e. whether the value of the counter C exceeds that of M, meaning that the algorithm failed to converge within the required number of iterations).

If it is determined at step S30 that the convergence limit has not been exceeded, then processing proceeds to step S40 where it is determined whether to evaluate the performance of the small cell using the selected primary scrambling code based on measurements made by the small cell base station itself or whether to also utilize measurements provided by the user equipment.

If it is determined at step S40 that the performance is to be assessed based on measurements made by the small cell base station then processing proceeds to S50.

At step S50, the fitness metric $I_{SC}$ is calculated using measurements made by the small cell base station, as described in embodiment 1 above.

If it is determined at step S40 that the performance is to be assessed based on measurements provided by the user equipment then processing proceeds to S55.

At step S55, the fitness metric $I_{SC}$ is calculated using measurements made by the small cell base station as augmented by measurements made by the user equipment, as described more detail below.

At step S60, the fitness metric $I_{SC}$ is compared against a desired threshold T. The primary scrambling code Sx is considered to be satisfactory if $I_{SC}$ is less than T and unsatisfactory otherwise, as described in embodiment 1 above.

If the primary scrambling code Sx is considered to be satisfactory, then processing proceeds to step S70.

At step S70, the probability vector P is then modified in accordance with equation 1 described above. Processing then returns to step S20.

If the primary scrambling code Sx is considered to be unsatisfactory, then processing proceeds to step S80.

At step S80, the probability vector P is modified in accordance with equation 2 described above. Processing then returns to step S20.

If it is determined at step S30 that the convergence limit has been exceeded, then processing proceeds to step S90.

At step S90, the small cell base station scans all the reserved primary scrambling codes and constructs a list of the primary scrambling codes that have a detected energy above a certain threshold level. The small cell base station then chooses a random scrambling code from a set of reserved primary scrambling codes that are undetected. If all the of reserved primary scrambling codes are detected, then the base station chooses the one that has the minimum detected power, as described in embodiment 2 above.

It will be appreciated that it would be possible to periodically re-initialise the primiary scrambling code selection by returning to step S10.

Threshold Variation

In one embodiment, the satisfaction threshold T of the communication free learning algorithm is reduced iteratively when the communication free learning algorithm fails to converge, with the switching to the iterative greedy algorithm only occurring after the satisfaction threshold has been reduced a number of times.

Using this approach, the small cell base station commences with the communication free learning algorithm and continues for N iterations (N can be fixed or adaptive). If the communication free learning algorithm doesn't converge within N steps, the communication free learning algorithm is re-executed but with a lower satisfaction threshold ($T \leftarrow T-\delta$).

The iteration counter C is then reset to zero and the communication free learning algorithm is re-executed for another M iterations (M can also be changed for different satisfaction thresholds). This process is repeated for the given number of reductions in the satisfaction threshold and, if the communication free learning algorithm still does not converge, the base station then switches to the iterative greedy algorithm.

Network Signaling

If the co-primary scrambling code interference is still above the satisfaction threshold (i.e. fails to meet the satisfaction threshold) following convergence, the base station may send a notification alarm to the network controller (which could be a home node B gateway (HNB-GW) or an operations and maintenance (O&M) Server).

Hidden Base Stations

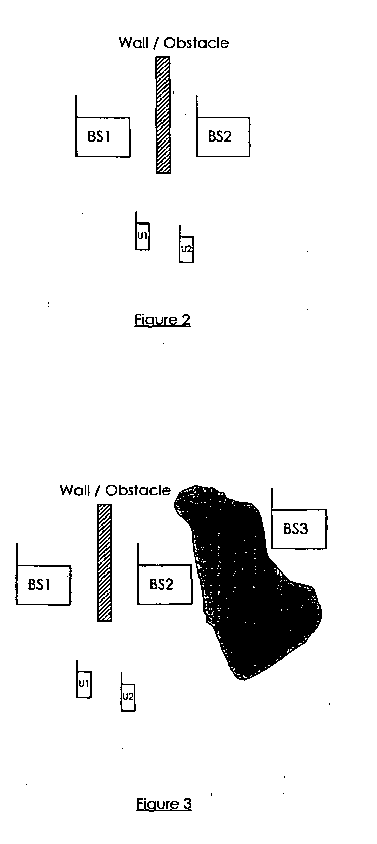

The embodiments mentioned generally utilize measurements made by base stations themselves. However, in practice, user equipment tend to be the main victim of primary scrambling code collision. A hidden base station problem occurs when two base stations cannot sense each other's transmissions (or the received signals are very weak) but their users are affected by co-primary scrambling code interference. This can occur particularly in dense indoor deployments of small cells, such as that illustrated in Figure 2.

As can be seen in Figure 2, although base station BS1 and base station BS2 are spatially closely located, the base stations may assume that they are located further part due to the losses caused by the wall and therefore may deploy the same primary scrambling codes. In that case, use equipment U 1 (which is being supported by base station BS1) and U2 (which is being supported by base station BS2) may utilise the same primary scrambling code, which results in interference.

To ameliorate the effects of co-primary scrambling code interference caused by hidden base stations, the base stations take into account the measurement reports from user equipment when the primary scrambling codes are decided. If the instantaneous measurement reports are considered, the choice of primary scrambling code will be affected by the current location of existing users and their channel quality from their own and other base stations. This would make the primary scrambling code selection process very unstable. Accordingly, the base stations instead rely on reports averaged over a period of time. The length of that period of time may be selectively adjusted.

The measurement reports from the user equipment typically indicate two parameters: the first is the level of the interference that the user equipment is actually experiencing from other base stations using an identical primary scrambling code; the other is the distribution of user equipment around the base station.

As discussed above, identifying the level of interference is necessary to be able to correct for the hidden base station problem and to have a better picture of the effect of other base stations signals on supported user equipment. The distribution is also very useful as this is generally non-uniform. In addition, there are locations with which have a high probability of there being user equipment and there may be locations where user equipment cannot be.

To to capture this, a base station collects the measurement reports over a long enough period of time (typically a number of days) and applies a correction coefficient when deciding the primary scrambling code. The measurement reports typically consist of a cell identifier (ID) and the detected C-PICH signal power of the neighboring cells. The base stations then utilize these reports when selecting their primary scrambling codes. For example, consider a base station that is provided with N individual users' measurement reports from K neighboring cells. In order to simplify this example, the cell ID of the neighboring cells is designated from 1 to K, as shown in Table 1.

Table 1 - Mobile Users Reports

|  | Cell Id=1 | Cell Id=2 | $\cdots$ | Cell_Id=K |
|---|---|---|---|---|
| Report from User 1 | CPICH_Rx= $P_{1,1}$ | CPICH_Rx= $P_{1,2}$ | $\cdots$ | CPICH_Rx= $P_{1,k}$ |
| Report from User 2 | CPICH_Rx= $P_{2,1}$ | CPICH_Rx= $P_{2,2}$ | $\cdots$ | CPICH_Rx= $P_{2,k}$ |
| ... | ... | ... | $\cdots$ | ... |
| Report from User N | CPICH_Rx= $P_{N,1}$ | CPICH_Rx= $P_{N,2}$ | $\cdots$ | CPICH_Rx= $P_{N,k}$ |
| **Average values** | $P_1' = \dfrac{1}{N} \times \sum_{n=1}^{N} P_{n,1}$ | $P_2' = \dfrac{1}{N} \times \sum_{n=1}^{N} P_{n,2}$ |  | $P_k' = \dfrac{1}{N} \times \sum_{n=1}^{N} P_{n,k}$ |

These average coefficient values will then be used instead of the base station's own measurements when the primary scrambling codes are decided. For example, in the iterative greedy algorithm technique, the base station will scan the primary scrambling codes of all neighboring base stations but, when the overall some of the energy associated with each primary scrambling code is calculated, the base station will instead use the averaged values rather than using it it's own measurements.

For example, consider the measurements for a given base station as shown in Table 2.

Table 2 - Base Station Measurements

|  | Cell Id=1 | Cell Id=2 | $\cdots$ | Cell Id=K |
|---|---|---|---|---|
| Received CPICH Power (Measured by Base-station) | $P_1$ | $P_2$ | $\cdots$ | $P_K$ |
| Scrambling Code (Example values) | S1 | S3 |  | S2 |
| Average values reported from users | $P'_1$ | $P'_2$ | $\cdots$ | $P'_K$ |

From Table 2, the base station then derrives Table 3 which gives be detected power for each scrambling code. Here, SC(x) represents the scrambling codes used by the $X^{th}$ ($1 \leq x \leq k$) neighboring cell where there are a total of m primary scrambling codes (S 1, S2,... Sm) available.

Table 3 - Detected Power Per Scrambling Code

| | Detected power on S1 | Detected power on S2 | ⋯ | Detected power on Sm |
|---|---|---|---|---|
| Using base-station measurements | $\sum\limits_{n=1,SC(n)=S1}^{K} P_n$ | $\sum\limits_{n=1,SC(n)=S2}^{K} P_n$ | ⋯ | $\sum\limits_{n=1,SC(n)=Sm}^{K} P_n$ |
| Using users reported measurements | $\sum\limits_{n=1,SC(n)=S1}^{K} P'_n$ | $\sum\limits_{n=1,SC(n)=S1}^{K} P'_n$ | ⋯ | $\sum\limits_{n=1,SC(n)=S1}^{K} P'_n$ |

Considering the iterative greedy algorithm technique, the base station chooses the primary scrambling code with the lowest detected power. If there are scrambling codes with a detected power which is lower than a detection threshold (indicating unallocated codes), then the base station chooses one of these unallocated primary scrambling codes randomly.

Measurement report Usage

Figure 3 illustrates an example deployment of small cell base stations which illustrates how using measurement reports from user equipment can influence the selection of the primary scrambling code. There is provided three base stations BS1, BS2, BS3 and an area 100 which represents a location that cannot be visited by user equipment. Consider that base station BS2 has a choice of a primary scrambling code that would either collide with base station BS 1 or collide with base station BS three.

If base station BS2 relies on its own measurements, it would see a strong signal from base station BS3 and a weak signal from base station BS1. Accordingly, it would likely choose a primary scrambling code that would collide with base station BS 1. However, if user measurement reports are taken into account, it would be noted that the distribution of user equipment supported by base station BS2 is closer to base station BS1 (and on many occasions would not experience the losses caused by the wall between base stations BS1 and BS2). Accordingly, the user equipment would report higher received power from base station BS1 than from base station BS2 and, hence, base station BS2 should choose these primary scrambling code used by base station BS3.

The users measurement reports can similarly be used for the communication free learning algorithm. In those circumstances, the total co-primary scrambling code interference would be calculated based on the user measurement reports when the algorithm's satisfaction is being evaluated.

This approach provides for significant performance improvements over existing techniques. Simulations show results having more than a 110% improvement in terms of co-primary scrambling code interference when the hybrid algorithm is utilized compared to a single greedy algorithm.

This approach provides a straightforward way to mitigate the co-scrambling code interference experienced in small cell networks. The algorithms are of low complexity and are fully distributed making them suitable for immediate deployment.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

**Claims**

1. A method of selecting a primary scrambling code from a set of reserved primary scrambling codes for use by a small cell deployable within an overlying cell of a wireless telecommunications network, said method comprising the steps of:

   determining (S50; S55) a performance indicator indicative of an estimated communication performance of said small cell when using a given primary scrambling code from said set of reserved primary scrambling codes;
   periodically adjusting (S70; S80) a weighting associated with at least one primary scrambling code of said set of reserved primary scrambling codes based on said performance indicator, said step of periodically adjusting comprising increasing a difference in weighting between said primary scrambling code selected to be used by said small cell and others in said set of reserved primary scrambling codes when said performance indicator associated with said primary scrambling code selected to be used by said small cell exceeds a performance threshold; and
   periodically selecting (S20) a primary scrambling code for use by said small cell from said set of reserved primary scrambling codes based on said weightings.

2. The method of claim 1, wherein said step of periodically adjusting comprises maximising a weighting of said primary scrambling code selected to be used by said small cell and minimising a weighting of others in said set of reserved primary scrambling codes when said performance indicator associated with said primary scrambling code selected to be used by said small cell exceeds a performance threshold.

3. The method of any preceding claim, wherein said step of periodically adjusting comprises reducing a weighting of said primary scrambling code selected to be used by said small cell and increasing a weighting of others in said set of reserved primary scrambling codes when said performance indicator associated with said primary scrambling code selected to be used by said small cell fails to achieve a performance threshold.

4. The method of any preceding claim, wherein the step of periodically adjusting comprises reducing a weighting of the primary scrambling code selected to be used by the small cell by a first amount and increasing a weighting of others in the set of reserved primary scrambling codes by a second amount, the second amount being less than the first amount when the performance indicator associated with the primary scrambling code selected to be used by the small cell fails to achieve a performance threshold.

5. The method of any preceding claim, wherein said weighting comprises a selection probability for an associated primary scrambling code.

6. The method of any preceding claim, wherein said performance indicator indicative of an estimated communication performance of said small cell when using each of said set of reserved primary scrambling codes is determined from measurements made by at least one of a small cell base station supporting said small cell and measurements made by user equipment served by said small cell.

7. The method of any preceding claim, wherein said performance indicator indicative of an estimated communication performance of said small cell when using each of said set of reserved primary scrambling codes is determined from averaged measurements made by user equipment served by said small cell.

8. The method of any preceding claim; wherein said performance indicator comprises one of a received power of pilot signals using an associated primary scrambling code and an interference level associated with signals using an associated primary scrambling code.

9. The method of any preceding claim, comprising the step of determining whether said primary scrambling code selected to be used by said small cell achieves a communications performance threshold within a set number of periodic adjustments and, if not, reducing said communications performance threshold.

10. The method of any preceding claim, comprising the step of determining whether said primary scrambling code selected to be used by said small cell achieves a communications performance threshold within a set number of periodic adjustments and, if not, utilising a modified primary scrambling code selection scheme.

11. The method of preceding claim, wherein said modified primary scrambling code selection scheme comprises the steps of:

> determining a performance indicator indicative of an estimated communication performance of said small cell when using each of said set of reserved primary scrambling codes;
> selecting said primary scrambling code to be that primary scrambling code indicated by its associated performance indicator to have a greatest estimated communications performance.

12. The method of claim 10 or 11, wherein said set number of periodic adjustments is set in proportion to a number of user equipments being served by said small cell.

13. The method of any preceding claim wherein said step of determining said performance indicator occurs at randomised intervals.

14. A network node adapted to select a primary scrambling code from a set of reserved primary scrambling codes for use by a small cell deployable within an overlying cell of a wireless telecommunications network, said network node comprising:

> determining logic operable to determine a performance indicator indicative of an estimated communication performance of said small cell when using a given primary scrambling code from said set of reserved primary scrambling codes;
> adjustment logic operable to periodically adjust a weighting associated with at least one primary scrambling code of said set of reserved primary scrambling codes based on said performance indicator wherein the adjustment logic is operable to increase a difference in weighting between the primary scrambling code selected to be used by the small cell and others in the set of reserved primary scrambling codes when the performance indicator associated with the primary scrambling code selected to be used by the small cell exceeds a performance threshold; and
> selection logic operable to periodically select a primary scrambling code for use by said small cell from said set of reserved primary scrambling codes based on said weightings.

15. A computer program product operable, when executed on a computer, to perform the method steps of any one of claims 1 to 13.

**Patentansprüche**

1. Verfahren zum Auswählen eines primären Verwürfelungscodes aus einem Satz von reservierten Verwürfelungscodes zur Verwendung durch eine innerhalb einer überlagerten Zelle eines drahtlosen Telekommunikationsnetzwerks einsetzbare kleine Zelle, wobei das besagte Verfahren die folgenden Schritte umfasst:

> Ermitteln (S50; S55) eines Leistungsindikators, welcher für eine geschätzte Kommunikationsleistung der besagten kleinen Zelle bei Verwendung eines gegebenen primären Verwürfelungscodes aus dem besagten Satz von reservierten primären Verwürfelungscodes indikativ ist;

periodisches Anpassen (S70; S80), auf der Basis des besagten Leistungsindikators, einer mit mindestens einem primären Verwürfelungscode des besagten Satzes von reservierten primären Verwürfelungscodes assoziierten Gewichtung, wobei der besagte Schritt des periodischen Anpassens das Vergrößern einer Gewichtungsdifferenz zwischen dem besagten ausgewählten, von der besagten kleinen Zelle zu verwendenden primären Verwürfelungscode und anderen Verwürfelungscodes des besagten Satzes von reservierten primären Verwürfelungscodes umfasst, wenn der besagte mit dem besagten ausgewählten, von der besagten kleinen Zelle zu verwendenden primären Verwürfelungscode assoziierte Leistungsindikator einen Leistungsgrenzwert überschreitet; und

periodisches Auswählen (S20), auf der Basis der besagten Gewichtungen, eines primären Verwürfelungscodes aus dem besagten Satz von reservierten primären Verwürfelungscodes zur Verwendung durch die besagte kleine Zelle.

2. Verfahren nach Anspruch 1, wobei der besagte Schritt des periodischen Anpassens das Maximieren einer Gewichtung des besagten ausgewählten, von der besagten kleinen Zelle zu verwendenden primären Verwürfelungscodes und das Minimieren einer Gewichtung von anderen Verwürfelungscodes des besagten Satzes von reservierten primären Verwürfelungscodes umfasst, wenn der besagte mit dem besagten ausgewählten, von der besagten kleinen Zelle zu verwendenden primären Verwürfelungscode assoziierte Leistungsindikator einen Leistungsgrenzwert überschreitet.

3. Verfahren nach einem beliebigen der vorstehenden Ansprüche, wobei der besagte Schritt des periodischen Anpassens das Reduzieren einer Gewichtung des besagten ausgewählten, von der besagten kleinen Zelle zu verwendenden primären Verwürfelungscodes und das Erhöhen einer Gewichtung von anderen Verwürfelungscodes des besagten Satzes von reservierten primären Verwürfelungscodes umfasst, wenn der besagte mit dem besagten ausgewählten, von der besagten kleinen Zelle zu verwendenden primären Verwürfelungscode assoziierte Leistungsindikator einen Leistungsgrenzwert nicht erreicht.

4. Verfahren nach einem beliebigen der vorstehenden Ansprüche, wobei der besagte Schritt des periodischen Anpassens das Reduzieren einer Gewichtung des besagten ausgewählten, von der besagten kleinen Zelle zu verwendenden primären Verwürfelungscodes um eine erste Menge und das Erhöhen einer Gewichtung von anderen Verwürfelungscodes des besagten Satzes von reservierten primären Verwürfelungscodes um eine zweite Menge umfasst, wobei die zweite Menge kleiner als die erste Menge ist, wenn der mit dem ausgewählten, von der besagten kleinen Zelle zu verwendenden primären Verwürfelungscode assoziierte Leistungsindikator einen Leistungsgrenzwert nicht erreicht.

5. Verfahren nach einem beliebigen der vorstehenden Ansprüche, wobei die besagte Gewichtung eine Auswahlwahrscheinlichkeit für einen assoziierten primären Verwürfelungscode umfasst.

6. Verfahren nach einem beliebigen der vorstehenden Ansprüche, wobei der besagte Leistungsindikator, welcher für eine geschätzte Kommunikationsleistung der besagten kleinen Zelle bei Verwendung eines jeden Verwürfelungscodes des besagten Satzes von reservierten primären Verwürfelungscodes indikativ ist, aus mindestens entweder von einer kleinzelligen Basisstation, welche die besagte kleine Zelle unterstützt, durchgeführten Messungen oder aus von einem von der besagten kleinen Zelle bedienten Benutzergerät vorgenommenen Messungen ermittelt wird.

7. Verfahren nach einem beliebigen der vorstehenden Ansprüche, wobei der besagte Leistungsindikator, welcher für eine geschätzte Kommunikationsleistung der besagten kleinen Zelle bei Verwendung eines jeden Verwürfelungscodes des besagten Satzes von reservierten primären Verwürfelungscodes indikativ ist, aus von dem von der besagten kleinen Zelle bedienten Benutzergerät vorgenommenen gemittelten Messungen ermittelt wird.

8. Verfahren nach einem beliebigen der vorstehenden Ansprüche, wobei der besagte Leistungsindikator entweder eine empfangene Leistung von Pilotsignalen, welche einen assoziierten primären Verwürfelungscode verwenden, oder einen mit Signalen, welche einen assoziierten primären Verwürfelungscode benutzen, assoziierten Störpegel umfasst.

9. Verfahren nach einem beliebigen der vorstehenden Ansprüche, umfassend den Schritt des Ermittelns, ob der besagte ausgewählte, von der besagten kleinen Zelle zu benutzende primäre Verwürfelungscode einen Kommunikationsleistungsgrenzwert innerhalb einer festgesetzten Anzahl von periodischen Anpassungen erreicht, und anderenfalls das Reduzieren des besagten Kommunikationsleistungsgrenzwerts.

**10.** Verfahren nach einem beliebigen der vorstehenden Ansprüche, umfassend den Schritt des Ermittelns, ob der besagte ausgewählte, von der besagten kleinen Zelle zu benutzende primäre Verwürfelungscode einen Kommunikationsleistungsgrenzwert innerhalb einer festgesetzten Anzahl von periodischen Anpassungen erreicht, und anderenfalls das Verwenden eines modifizierten Auswahlschemas des primären Verwürfelungscodes.

**11.** Verfahren gemäß dem vorstehenden Anspruch, wobei das besagte modifizierte Auswahlschemas des primären Verwürfelungscodes die folgenden Schritte umfasst:

Ermitteln eines Leistungsindikators, welcher für eine geschätzte Kommunikationsleistung der besagten kleinen Zelle bei Verwendung eines jeden Verwürfelungscodes des besagten Satzes von reservierten primären Verwürfelungscodes indikativ ist;
Auswählen des besagten primären Verwürfelungscodes als denjenigen primären Verwürfelungscode, für welchen sein assoziierter Leistungsindikator anzeigt, dass er die größte geschätzte Kommunikationsleistung aufweist.

**12.** Verfahren nach Anspruch 10 oder 11, wobei die besagte festgesetzte Anzahl von periodischen Anpassungen proportional zu einer Anzahl von Benutzergeräten, welche von der besagten kleinen Zelle bedient werden, festgesetzt wird.

**13.** Verfahren nach einem beliebigen der vorstehenden Ansprüche, wobei der besagte Schritt des Ermittelns des besagten Leistungsindikators in randomisierten Intervallen durchgeführt wird.

**14.** Netzwerkknoten, ausgelegt für das Auswählen eines primären Verwürfelungscodes aus einem Satz von reservierten Verwürfelungscodes zur Verwendung durch eine innerhalb einer überlagerten Zelle eines drahtlosen Telekommunikationsnetzwerks einsetzbare kleine Zelle, wobei das besagte Verfahren die folgenden Schritte umfasst:

Ermittlungslogik, betreibbar für die Ermittlung eines Leistungsindikators, welcher für eine geschätzte Kommunikationsleistung der besagten kleinen Zelle bei Verwendung eines gegebenen primären Verwürfelungscodes aus dem besagten Satz von reservierten primären Verwürfelungscodes indikativ ist;
Anpassungslogik, betreibbar für das periodische Anpassen, auf der Basis des besagten Leistungsindikators, einer mit mindestens einem primären Verwürfelungscode des besagten Satzes von reservierten primären Verwürfelungscodes assoziierten Gewichtung, wobei die Anpassungslogik betreibbar ist, um eine Gewichtungsdifferenz zwischen dem für die Verwendung durch die kleine Zelle ausgewählten primären Verwürfelungscode und anderen Verwürfelungscodes des besagten Satzes von reservierten primären Verwürfelungscodes zu vergrößern, wenn der mit dem für die Verwendung durch die kleine Zelle ausgewählten primären Verwürfelungscode assoziierte Leistungsindikator einen Leistungsgrenzwert überschreitet; und
Auswahllogik, betreibbar für das periodische Auswählen, auf der Basis der besagten Gewichtungen, eines primären Verwürfelungscodes aus dem besagten Satz von reservierten primären Verwürfelungscodes zur Verwendung durch die besagte kleine Zelle.

**15.** Computerprogramm-Produkt, betreibbar für die Durchführung der Verfahrensschritte gemäß einem beliebigen der Ansprüche 1 bis 13, wenn es auf einem Computer ausgeführt wird.

## Revendications

**1.** Procédé de sélection d'un code de brouillage primaire parmi un ensemble de codes de brouillage primaires réservés destinés à être utilisés par une petite cellule pouvant se déployer dans une cellule supérieure d'un réseau de télécommunication sans fil, ledit procédé comprenant les étapes suivantes :

déterminer (S50 ; S55) un indicateur de performance indiquant une performance de communication estimée de ladite petite cellule lors de l'utilisation d'un code de brouillage primaire donné parmi ledit ensemble de codes de brouillage primaires réservés ;
ajuster périodiquement (S70 ; S80) une pondération associée à au moins un code de brouillage primaire parmi ledit ensemble de codes de brouillage primaires réservés en fonction dudit indicateur de performance, ladite étape d'ajustement périodique comprenant l'augmentation d'une différence de pondération entre ledit code de brouillage primaire sélectionné pour être utilisé par ladite petite cellule et d'autres codes parmi ledit ensemble de codes de brouillage primaires réservés lorsque ledit indicateur de performance associé audit code de brouillage primaire sélectionné pour être utilisé par ladite petite cellule dépasse un seuil de performance ; et
sélectionner périodiquement (S20) un code de brouillage primaire destiné à être utilisé par ladite petite cellule
parmi ledit ensemble de codes de brouillage primaires réservés en fonction desdites pondérations.

2. Procédé selon la revendication 1, dans lequel ladite étape d'ajustement périodique consiste à maximiser une pondération dudit code de brouillage primaire sélectionné pour être utilisé par ladite petite cellule et à réduire au minimum une pondération d'autres codes parmi ledit ensemble de codes de brouillage primaires réservés lorsque ledit indicateur de performance associé audit code de brouillage primaire sélectionné pour être utilisé par ladite petite cellule dépasse un seuil de performance.

3. Procédé selon l'une quelconque des revendications précédentes, dans lequel ladite étape d'ajustement périodique consiste à réduire une pondération dudit code de brouillage primaire sélectionné pour être utilisé par ladite petite cellule et à augmenter une pondération d'autres codes parmi ledit ensemble de codes de brouillage primaires réservés lorsque ledit indicateur de performance associé audit code de brouillage primaire sélectionné pour être utilisé par ladite petite cellule n'atteint pas un seuil de performance.

4. Procédé selon l'une quelconque des revendications précédentes, dans lequel l'étape d'ajustement périodique consiste à réduire une pondération du code de brouillage primaire sélectionné pour être utilisé par la petite cellule selon une première quantité et à augmenter une pondération d'autres codes parmi l'ensemble de codes de brouillage primaires réservés selon une deuxième quantité, la deuxième quantité étant inférieure à la première quantité lorsque l'indicateur de performance associé au code de brouillage primaire sélectionné pour être utilisé par la petite cellule n'atteint pas un seuil de performance.

5. Procédé selon l'une quelconque des revendications précédentes, dans lequel ladite pondération comprend une probabilité de sélection pour un code de brouillage primaire associé.

6. Procédé selon l'une quelconque des revendications précédentes, dans lequel ledit indicateur de performance, indiquant une performance de communication estimée de ladite petite cellule lors de l'utilisation de chaque code parmi ledit ensemble de codes de brouillage primaires réservés, est déterminé à partir de mesures effectuées par au moins une station de base de petites cellules prenant en charge ladite petite cellule et les mesures effectuées par l'équipement utilisateur desservi par ladite petite cellule.

7. Procédé selon l'une quelconque des revendications précédentes, dans lequel ledit indicateur de performance, indiquant une performance de communication estimée de ladite petite cellule lors de l'utilisation de chaque code parmi ledit ensemble de codes de brouillage primaires réservés, est déterminé à partir de mesures moyennes effectuées par l'équipement utilisateur desservi par ladite petite cellule.

8. Procédé selon l'une quelconque des revendications précédentes, dans lequel ledit indicateur de performance comprend une puissance reçue de signaux pilotes utilisant un code de brouillage primaire associé ou un niveau d'interférence associé aux signaux utilisant un code de brouillage primaire associé.

9. Procédé selon l'une quelconque des revendications précédentes, comprenant l'étape consistant à déterminer si ledit code de brouillage primaire sélectionné pour être utilisé par ladite petite cellule atteint un seuil de performance de communication dans un nombre défini d'ajustements périodiques et, si tel n'est pas le cas, à réduire ledit seuil de performance de communication.

10. Procédé selon l'une quelconque des revendications précédentes, comprenant l'étape consistant à déterminer si ledit code de brouillage primaire sélectionné pour être utilisé par ladite petite cellule atteint un seuil de performance de communication dans un nombre défini d'ajustements périodiques et, si tel n'est pas le cas, à utiliser un schéma de sélection de code de brouillage primaire modifié.

11. Procédé selon la revendication précédente, dans lequel ledit schéma de sélection de code de brouillage primaire modifié comprend les étapes suivantes :

déterminer un indicateur de performance indiquant une performance de communication estimée de ladite petite cellule lors de l'utilisation de chaque code parmi ledit ensemble de codes de brouillage primaires réservés ;
sélectionner ledit code de brouillage primaire pour être le code de brouillage primaire indiqué par son indicateur de performance associé pour présenter une performance de communication estimée maximale.

**12.** Procédé selon la revendication 10 ou 11, dans lequel ledit nombre défini d'ajustements périodiques est défini proportionnellement à un nombre d'équipements utilisateurs desservis par ladite petite cellule.

**13.** Procédé selon l'une quelconque des revendications précédentes dans lequel ladite étape de détermination dudit indicateur de performance se produit à intervalles aléatoires.

**14.** Noeud de réseau adapté pour sélectionner un code de brouillage primaire parmi un ensemble de codes de brouillage primaires réservés destinés à être utilisés par une petite cellule pouvant se déployer dans une cellule supérieure d'un réseau de télécommunication sans fil, ledit noeud de réseau comprenant :

une logique de détermination permettant de déterminer un indicateur de performance indiquant une performance de communication estimée de ladite petite cellule lors de l'utilisation d'un code de brouillage primaire donné parmi ledit ensemble de codes de brouillage primaires réservés ;
une logique d'ajustement permettant d'ajuster périodiquement une pondération associée à au moins un code de brouillage primaire parmi ledit ensemble de codes de brouillage primaires réservés en fonction dudit indicateur de performance, dans lequel la logique d'ajustement permet d'augmenter une différence de pondération entre le code de brouillage primaire sélectionné pour être utilisé par la petite cellule et d'autres codes parmi l'ensemble de codes de brouillage primaires réservés lorsque l'indicateur de performance associé au code de brouillage primaire sélectionné pour être utilisé par la petite cellule dépasse un seuil de performance ; et
une logique de sélection permettant de sélectionner périodiquement un code de brouillage primaire destiné à être utilisé par ladite petite cellule parmi ledit ensemble de codes de brouillage primaires réservés en fonction desdites pondérations.

**15.** Produit de programme informatique permettant, lorsqu'il est exécuté sur un ordinateur, d'exécuter les étapes du procédé selon l'une quelconque des revendications 1 à 13.

Figure 1

Wall / Obstacle

BS1

BS2

U1

U2

Figure 2

Wall / Obstacle

BS3

BS1

BS2

U1

U2

Figure 3

**EP 2 661 114 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009140310 A1